Europäisches Patentamt

European Patent Office

Office européen des brevets

(11) Veröffentlichungsnummer: **0 167 792**

**A1**

## (12) EUROPÄISCHE PATENTANMELDUNG

(21) Anmeldenummer: 85106768.6

(22) Anmeldetag: 01.06.85

(51) Int. Cl.⁴: **B 60 R 21/32**

(30) Priorität: 10.07.84 DE 3425281

(43) Veröffentlichungstag der Anmeldung:
15.01.86 Patentblatt 86/3

(84) Benannte Vertragsstaaten:
DE FR GB IT SE

(71) Anmelder: ROBERT BOSCH GMBH
Postfach 50
D-7000 Stuttgart 1(DE)

(72) Erfinder: Mattes, Bernhard, Dipl.-Ing.
Querstrasse 41
D-7123 Sachsenheim(DE)

(72) Erfinder: Mausner, Eberhard, Dipl.-Ing.
Gstattnerhofstrasse 2
A-4020 Linz/Urfahr(AT)

(72) Erfinder: Suchowerskyj, Wadym, Dr. Dipl.-Ing.
Steinbockweg 12
D-7250 Leonberg(DE)

(54) Schaltungsanordnung zur Registrierung von fehlerhaften Auslösesignalen für ein Rückhaltesystem.

㊸ Es wird eine Schaltungsanordnung zur Registrierung von fehlerhaften Auslösesignalen für ein Rückhaltesystem, insbesondere ein Airbag- oder ein Gurtstraffersystem in einem Fahrzeug vorgeschlagen, wobei ein aus einem ersten Verzögerungssensor (10) sowie einer Auswerteschaltung (11) bestehender Auslösekreis ein Auslösesignal bei einer unfallbedingten Verzögerung erzeugt. Dieses Auslösesignal wird jedoch nur bei gleichzeitigem Ansprechen eines zweiten, im wesentlichen aus einem zweiten Verzögerungssensor (17) bestehenden Auslösekreises wirksam und löst das Rückhaltesystem aus. Eine Überwachungsschaltung (19) zur Überwachung des Auftretens eines Auslösesignals bei gleichzeitigem Nicht-Ansprechen des zweiten Auslösekreises (17) löst gegebenenfalls eine Warneinrichtung (25) aus die den Fahrer des Fahrzeugs über die genannte Fehlfunktion informiert.

FIG.1

R. **19488**

18.6.1984 Ve/TEX-Fl

ROBERT BOSCH GMBH, 7000 Stuttgart 1

**Schaltungsanordnung zur Registrierung von fehlerhaften Auslösesignalen
für ein Rückhaltesystem**

Stand der Technik

Die Erfindung geht aus von einer Schaltungsanordnung zur Registrierung
von fehlerhaften Auslösesignalen für ein Rückhaltesystem in einem Fahrzeug. Solche üblicherweise als Air bag oder Gurtstraffer ausgebildeten
Rückhaltesysteme sind z. B. aus der US-A-3622974, der US-A-3874695 sowie
aus ATZ Automobiltechnische Zeitschrift 84 (1982) 2, Seite 77 bis 83
bekannt. Dabei erfolgt eine Auslösung des Rückhaltesystems über einen
Zündkreis, wenn das durch wenigstens einen Verzögerungssensor erfaßte
Verzögerungssignal vorgeschriebene Bedingungen erfüllt, die bei einer
unfallbedingten Verzögerung gegeben sind.

Aus der EP-A-22146 ist eine Schaltungsanordnung nach der Gattung des
Hauptanspruchs bekannt, die jedoch dazu dient, bei ausgelöstem Rückhaltesystem nachträglich rekonstruieren zu können, worauf die Fehlauslösung
zurückzuführen war. Fehlerhafte Auslösesignale eines Auslösekreises, die
nicht zu einer Auslösung des Rückhaltesystems führen, werden nicht erfaßt.

Schließlich ist aus der EP-A-11680 eine Schaltungsanordnung zur Überprüfung von Auslösesignalen bekannt, wobei ein Verzögerungssignal durch die
Schaltung simuliert und ein entsprechendes Auslösesignal durch vorgegebene Prüfschritte getestet wird. Dabei wird die Auslösung des Rückhaltesystems während des Testprogramms verhindert. Durch den Verzögerungssensor
erzeugte fehlerhafte Auslösesignale werden nicht überprüft.

...

Vorteile der Erfindung

Die erfindungsgemäße Schaltungsanordnung mit den kennzeichnenden Merkmalen des Hauptanspruchs hat den Vorteil, daß fehlerhafte, durch einen Verzögerungssensor bewirkte Auslösesignale eines Auslösekreises bei gleichzeitiger Verhinderung einer Fehlauslösung des Rückhaltesystems dem Fahrer des Fahrzeugs zuverlässig gemeldet werden.

Durch die in den Unteransprüchen aufgeführten Maßnahmen sind vorteilhafte Weiterbildungen und Verbesserungen der im Hauptanspruch angegebenen Schaltungsanordnung möglich. Besonders vorteilhaft ist die zeitliche Überwachung fehlerhafter Auslösesignale durch ein Zeitglied, insbesondere ein Zeitverzögerungsglied. Dadurch wird verhindert, daß sehr kurze Störimpulse bereits zur Aktivierung der Warneinrichtung führen.

Zeichnung

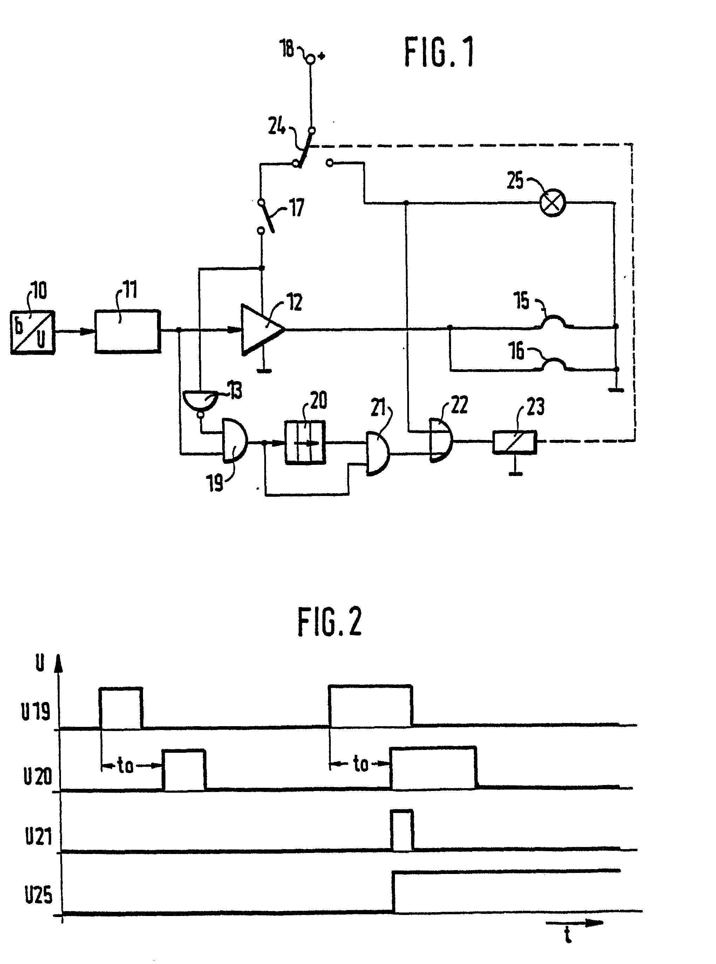

Ein Ausführungsbeispiel der Erfindung ist in der Zeichnung dargestellt und in der nachfolgenden Beschreibung näher erläutert. Es zeigen Figur 1 eine schaltungsmäßige Ausgestaltung eines Ausführungsbeispiels und Figur 2 ein Signaldiagramm zur Erläuterung der Wirkungsweise.

Beschreibung des Ausführungsbeispiels

Das Ausgangssignal eines Verzögerungssensors 10 ist einer Auswerteschaltung 11 zugeführt, die im Falle einer unfallbedingten Verzögerung ein Auslösesignal einem Ausgangsverstärker 12 zuführt. Dessen Ausgang steuert zwei Zündeinrichtungen 15, 16, deren zweiter Anschluß an Masse liegt. Durch die Zündeinrichtungen 15, 16 werden chemische Treibladungen in Rückhaltesystemen, wie z. B. Airbag oder Gurtstraffer, gezündet. Durch diese wird entweder der Airbag aufgeblasen oder der Gurtstraffer angezogen.

Zur Erhöhung der Auslösesicherheit ist ein zweiter Auslösekreis vorgesehen, der im wesentlichen aus einem zweiten Verzögerungssensor 17

...

besteht, der vorzugsweise als Quecksilberschalter ausgebildet ist, wie er in der EP-A-22146 näher beschrieben ist. Dieser zweite Verzögerungssensor 17 weist insbesondere einen geringeren Auslöseschwellwert auf und verbindet bei Überschreiten des Schwellwerts die Spannungsversorgung zwischen einer spannungsführenden Klemme 18 und dem Ausgangsverstärker 12. Anstelle eines Quecksilberschalters kann natürlich auch ein aufwendigerer zweiter Auslösekreis treten. Wesentlich ist, daß die Auslösung des oder der Rückhaltesysteme nur dann erfolgt, wenn sowohl am Ausgang der Auswerteschaltung 11 ein Auslösesignal erzeugt wird, wie auch der zweite Verzögerungssensor das Überschreiten einer Verzögerungsschwelle erkennt.

Die bis hierher beschriebene Anordnung 10 - 18 ist aus dem eingangs angegebenen Stand der Technik bekannt und dort näher beschrieben, so daß hier auf eine detailliertere Angabe des Auslösemechanismus verzichtet werden kann.

Der Ausgang der Auswerteschaltung 11 ist einem Eingang eines Und-Gatters 19 zugeführt, während der zweite Eingang des Und-Gatters 19 mit dem Ausgang eines Inverters 13 verbunden ist. Dieser fragt ab, ob der zweite Verzögerungssensor 17 angesprochen hat. Der Ausgang des Und-Gatters 19 ist sowohl über ein Zeitverzögerungsglied 20 mit einem ersten Eingang eines zweiten Und-Gatters 21, wie auch direkt mit dessen zweiten Eingang verbunden. Ausgangsseitig ist das Und-Gatter 21 über ein Oder-Gatter 22 mit der Magnetwicklung 23 eines Relais verbunden. Durch die Magnetwicklung 23 wird ein Umschaltkontakt 24 dieses Relais gesteuert, der in seiner ersten, nicht erregten Stellung die Klemme 18 mit dem zweiten Verzögerungssensor 17 und in seiner zweiten Schaltstellung die Klemme 18 mit dem zweiten Eingang des Oder-Gatters 22 sowie mit einer als Warnleuchte ausgebildeten Warneinrichtung 25 verbindet. Der zweite Anschluß der Warneinrichtung 25 liegt an Masse.

Die Wirkungsweise des in Figur 1 dargestellten Ausführungsbeispiels soll im folgenden anhand des in Figur 2 dargestellten Signaldiagramms erläutert werden. Sie besteht im wesentlichen darin, daß zunächst überprüft wird, ob ein Auslösesignal am Ausgang der Auswerteschaltung 11 vorliegt, obwohl der zweite Verzögerungssensor 17 keine kritische Verzögerung

...

erkannt hat und daher geöffnet ist. In diesem Fall wird am Ausgang des Und-Gatters 19 ein Signal U19 erzeugt, dessen Signallänge der des Auslösesignals am Ausgang der Auswerteschaltung 11 bei nicht angesprochenem zweiten Verzögerungssensor 17 entspricht. Dieses Signal U19 stellt ein Fehlersignal dar, da infolge der niedrigeren Auslöseschwelle des zweiten Verzögerungssensors 17 dieser in jedem Falle zuerst oder zumindest gleichzeitig ansprechen sollte. Das Signal U19 erscheint am Ausgang des Zeitverzögerungsglieds um den Betrag $t_0$ verzögert als Signal U20. Diese Zeit $t_c$ gibt den Grenzwert an, unterhalb dessen fehlerhafte Auslösesignale noch als Störsignale erkannt werden, die nicht registriert werden sollen. Dies ist beim ersten dargestellten Fall eines Signals U19 gegeben. Beim zweiten dargestellten Fall ist das Signal U19 jedoch länger als die Zeit $t_0$, so daß eine Überlappung der Signale U19 und U20 entsteht, was zu einem Ausgangssignal U21 am Ausgang des Und-Gatters 21 führt. Durch dieses Signal wird über das Oder-Gatter 22 die Wicklung des Relais 23, 24 erregt, so daß dessen Umschalter 24 in seine zweite Schaltstellung gelegt wird. In dieser zweiten Schaltstellung wird zum einen die Warneinrichtung 25 bzw. Warnlampe eingeschaltet und gleichzeitig die Stromversorgung zum Ausgangsverstärker 12 unterbrochen, so daß jede weitere Auslösung eines Rückhaltesystems ab diesem Zeitpunkt verhindert wird. Durch die Rückführung des positiven Spannungssignals zum zweiten Eingang des Oder-Gatters 22 wird eine Selbsthaltewirkung des Relais 23, 24 erreicht, so daß die Warneinrichtung 25 so lange eingeschaltet bleibt, bis die Spannungsversorgung durch Ausschaltung der Zündung des Fahrzeugs wieder unterbrochen wird. Die Warneinrichtung 25 informiert den Fahrer darüber, daß ein fehlerhaftes Auslösesignal erzeugt wurde, und die Funktionssicherheit des Rückhaltesystems nicht mehr gesichert ist. Das System wäre demzufolge zu überprüfen bzw. auszutauschen.

Anstelle eines Relais 23, 24 kann natürlich auch ein Halbleiterschalter mit Selbsthalteeffekt, wie z. B. ein Thyristor oder eine entsprechende, selbsthaltende Halbleiterschaltung treten.

Anstelle eines im Normalfall geöffneten und bei Überschreitung einer vorgebbaren Verzögerung geschlossenen, als Verzögerungsschalter ausgebildeten Verzögerungssensors 17 kann natürlich auch ein Verzögerungsschalter

...

- 5 -

treten, der im Normalfall geschlossen und im Falle der Überschreitung einer Verzögerungsschwelle geöffnet wird. Durch das im Verzögerungsfall erzeugte negative Spannungssignal könnte beispielsweise ein Ausgang freigegeben werden.

R. **19488**
18.6.1984 Ve/TEX-Fl

0167792

ROBERT BOSCH GMBH, 7000 Stuttgart 1


Ansprüche


1. Schaltungsanordnung zur Registrierung von fehlerhaften Auslösesignalen für ein Rückhaltesystem in einem Fahrzeug, mit einem aus einem ersten Verzögerungssensor sowie einer Auswerteschaltung bestehenden Auslösekreis zur Erzeugung eines Auslösesignals bei einer unfallbedingten Verzögerung, wobei dieses Auslösesignal nur bei gleichzeitigem Ansprechen eines zweiten Auslösekreises das Rückhaltesystem auslöst, dadurch gekennzeichnet, daß eine Überwachungsschaltung 19 zur Überwachung des Auftretens eines Auslösesignals bei gleichzeitigem Nicht-Ansprechen des zweiten Auslösekreises 17 vorgesehen ist, durch die eine Warneinrichtung 25 einschaltbar ist.


2. Schaltungsanordnung nach Anspruch 1, dadurch gekennzeichnet, daß die Überwachungsschaltung 19 ein durch das Auslösesignal getriggertes Zeitglied 20 aufweist, wobei die Warneinrichtung nur bei Überschreiten der Haltezeit des Zeitglieds 20 durch die Dauer des Auslösesignals eingeschaltet wird.


3. Schaltungsanordnung nach Anspruch 2, dadurch gekennzeichnet, daß das Zeitglied 20 ein Zeitverzögerungsglied ist, dessen Ausgangssignal bei gleichzeitigem Vorliegen des Auslösesignals die Warneinrichtung 25 einschaltet.


4. Schaltungsanordnung nach einem der vorhergehenden Ansprüche, dadurch gekennzeichnet, daß die Einschaltung der Warneinrichtung 25 über eine Selbsthalteschaltung 22 bis 24 erfolgt.


...

1 9 4 0 6 0 92

5. Schaltungsanordnung nach Anspruch 4, dadurch gekennzeichnet, daß die Selbsthalteschaltung ein selbsthaltendes Relais 22 bis 24 oder ein Thyristor ist.

6. Schaltungsanordnung nach einem der vorhergehenden Ansprüche, dadurch gekennzeichnet, daß zur Einschaltung der Warneinrichtung 25 ein Umschalter 24 vorgesehen ist, durch den beim Einschalten der Warneinrichtung 25 gleichzeitig die Versorgungsspannung zum Auslösekreis 10 bis 12, 17 oder der Auslösekreis selbst unterbrochen wird.

0167792

FIG.1

FIG.2

Europäisches
Patentamt

**EUROPÄISCHER RECHERCHENBERICHT**

**0167792**
Nummer der Anmeldung

EP 85 10 6768

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 368 899  (TECHNAR INC.)<br>* Ganzes Dokument * | 1,2,6 | B 60 R  21/32 |
| X | US-A-4 287 431  (YASUI et al.)<br>*  Spalte 3, Zeile 43 - Spalte 4, Zeile 27; Figur * | 1 | |
| X | DE-A-2 406 256  (EATON CORP.)<br>*  Seite  12, Zeile 4 - Seite 13, Zeile 27; Figur 1 * | 1 | |
| A | *  Seite 23, Zeile 21 - Seite 24, Zeile 10 * | 2 | |
| A | US-A-4 366 465  (VENEZIANO)<br>* Ganzes Dokument * | 1 | RECHERCHIERTE SACHGEBIETE (Int. Cl.4) |
| A | US-A-3 921 129  (SUMIDA)<br>* Ganzes Dokument * | 1,4,5 | B 60 R  21/00 |
| A | INGENIEURS DE L'AUTOMOBILE, Nr. 6, 1982, Seiten 69-77, Paris, FR; W. SUCHOWERSKYJ: "Evolution en matière de détecteurs de choc"<br>* Kapitel 5, Figur 13; Kapitel 7, Figur 18; Kapitel 8, Figur 19; Kapitel 10, Figuren 23,24 * | 1-3 | |

Der vorliegende Recherchenbericht wurde für alle Patentansprüche erstellt.

| Recherchenort | Abschlußdatum der Recherche | Prüfer |
|---|---|---|
| BERLIN | 02-09-1985 | LEMBLE Y.A.F.M. |